**Europäisches Patentamt**

**European Patent Office**

**Office européen des brevets**

(11) Veröffentlichungsnummer : **0 351 578 B1**

## (12) EUROPÄISCHE PATENTSCHRIFT

(45) Veröffentlichungstag der Patentschrift :
**25.11.92 Patentblatt 92/48**

(21) Anmeldenummer : **89111427.4**

(22) Anmeldetag : **23.06.89**

(51) Int. Cl.⁵ : **B64C 27/33**, B64C 27/48,
F16F 1/36

(30) Priorität : **21.07.88 DE 3824816**

(43) Veröffentlichungstag der Anmeldung :
**24.01.90 Patentblatt 90/04**

(45) Bekanntmachung des Hinweises auf die
Patenterteilung :
**25.11.92 Patentblatt 92/48**

(84) Benannte Vertragsstaaten :
**DE FR GB IT**

(56) Entgegenhaltungen :
**EP-A- 0 213 367**
**US-A- 4 541 777**

(72) Erfinder : **Wagner, Alois**
**Haus Nr.3**
**W-8157 Emmerkofen (DE)**
Erfinder : **Friedberger, Otmar**
**Haupstrasse 23**
**W-8014 Neubiberg (DE)**

(74) Vertreter : **Frick, Gerhard, Dipl.-Ing.**
**Messerschmitt-Bölkow-Blohm AG**
**Patentabteilung Postfach 801109**
**W-8000 München 80 (DE)**

(54) **Federelement zur drehwinkelbeweglichen Verbindung zweier Bauteile.**

(73) Patentinhaber : **Eurocopter Deutschland**
**Gesellschaft mit beschränkter Haftung**
**Postfach 80 11 40**
**W-8000 München 80 (DE)**

**Beschreibung**

Die Erfindung betrifft ein Federelement gemäß dem Oberbegriff des Patentanspruchs 1.

Ein derartiges Federelement hat in der Ausführungsform eines elastomeren Kugelgelenkes bei einem durch die DE-OS 28 29 605 bekannten Rotor die Funktion der winkelbeweglichen Lagerung einer Blattsteuerhülle der Blatteinstellwinkelsteuerung gegenüber der Rotornabe. Dabei hat die bevorzugte Elastomerschichtstoffausführung einen beträchtlichen Anteil am Gewicht der nabenseitigen Abstützung der Blattsteuerhülle, insbesondere sofern eine Auslegung für eine lange Lebensdauer des Gelenklagers gefordert wird.

Der Erfindung liegt daher die Aufgabe zugrunde, ein Federelement der eingangs genannten Art zu schaffen, mit welchem eine drehwinkelbewegliche Abstützung des einen Bauteils, z.B. der vorgenannten Blattsteuerhülle, am hierauf bezüglich feststehenden Bauteil, z.B. einem Rotornabenabschnitt, unter Verzicht auf die Kugel- oder dergleichen herkömmliche Gelenkform möglich ist.

Diese Aufgabe ist für ein gattungsgemäßes Federelement mit den kennzeichnenden Merkmalen des Patentanspruchs 1 gelöst. Hiernach hat das Federelement für eine bestimmte Anordnung zwischen den Bauteilen eine solche Ausgestaltung, daß es nicht nur die erforderliche Steifigkeit zur Erfüllung seiner Stützfunktion bezüglich des drehwinkelbeweglichen Bauteils aufweist, sondern auch zugleich als ein Torsionslager desselben wirksam ist, d.h. Drehwinkelbewegungen dieses Bauteils gegenüber dem feststehenden Bauteil ermöglicht. Hierbei wirkt der Profilsteg als ein durch das drehwinkelbewegliche Bauteil schwenkbarer Hebelarm, welcher bei dessen Drehwinkelverstellung den Profilfuß zwischen seinen beiden Anschlußmitteln (für das feststehende Bauteil) tordiert. Diese Wirkung läßt sich durch die im Anspruch 2 gekennzeichnete Gestaltung des T-Profils noch steigern.

Zudem hat das Federelement gemäß der Erfindung im eingangs erwähnten Anwendungsfall der Abstützung einer Blattsteuerhülle den beträchtlichen Vorteil, daß mit der im Anspruch 3 gekennzeichneten Konfiguration dessen Steifigkeit in der Blattschlag- und Blattschwenkrichtung durch entsprechende Wahl des Winkels zwischen den Profilschenkeln (Platten) verschieden einstellbar ist. Diese Einstellung bei der Auslegung des Federelementes wird man je nach Belastung des drehwinkelbeweglichen Bauteils "Blattsteuerhülle" (durch die Blatteinstellwinkelsteuerung) vornehmen, beispielsweise ist die Forderung nach großer Steifigkeit des Federelementes in Blattschlagrichtung durch einen relativ kleinen Schenkelwinkel erfüllbar.

Schließlich ist die Erfindung durch die in den Ansprüchen 4 und 5 gekennzeichneten Ausgestaltungen mit relativ geringem baulichen Aufwand insbesondere bei Bauteilen aus faserverstärktem Kunststoff von Vorteil.

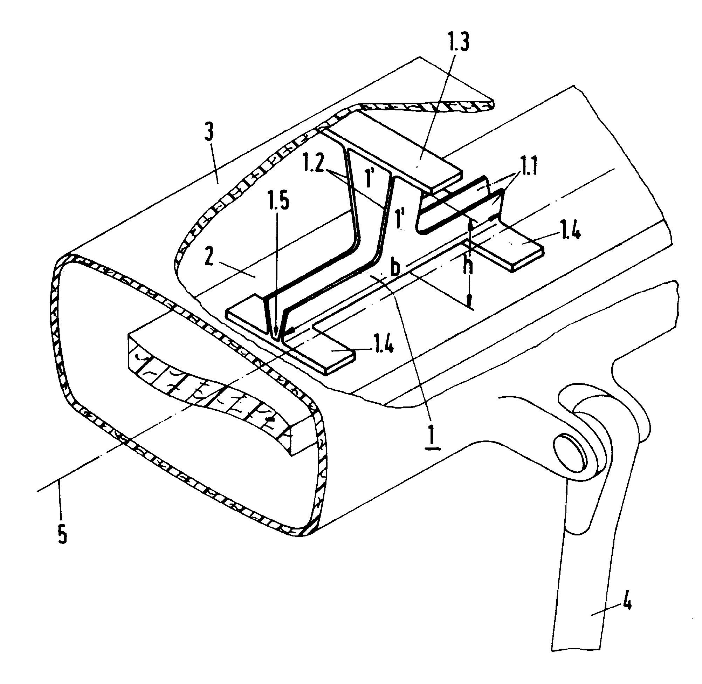

Nachfolgend wird die Erfindung anhand eines Ausführungsbeispiels mit Bezug auf die Zeichnung erläutert. Diese zeigt in perspektivischer Ansicht das erfindungsgemäße Federelement als Strebe 1 zwischen einer Blattwurzel 2 eines nicht weiter dargestellten (u.a. durch die DE-PS 32 41 754 bekannten) Rotorblattes und dessen Blattsteuerhülle 3 zur Verstellung des Blatteinstellwinkels mittels einer Steuerstange 4. Hierbei hat das Federelement "Strebe 1" für die Blattsteuerhülle 3 nicht nur eine Stützfunktion, sondern auch die Funktion eines Torsionslagers, damit die Blattsteuerhülle 3 gegenüber der bezüglich dieser feststehenden Blattwurzel 2 Drehwinkelbewegungen ausführen kann. Zur Erfüllung dieser Doppelfunktion weist die Strebe 1 in Erstreckungsrichtung der (beiden Bauteile) Blattwurzel 2 und Blattsteuerhülle 3 ein T-förmiges Profil mit einem torsionselastischen Profilfuß 1.1 auf, dessen Breite b (in Bauteilerstreckungsrichtung) vorzugsweise größer ist als die Höhe h des somit gegenüber dem Profilfuß 1.1. relativ steifen Profilsteges 1.2. Dabei ist der Profilsteg 1.2 am Stegende mit einem Anschlußmittel 1.3 für die Blattsteuerhülle 3 und der Profilfuß 1.1 an den Fußenden mit Anschlußmitteln 1.4 für die Blattwurzel 2 versehen, so daß die Verbindung des Profilfußes 1.1 mit der Blattwurzel 2 auf seine beiden Fußenden beschränkt ist. Dem zufolge kann der Profilfuß 1.1 tordieren, sobald der Profilsteg 1.2 durch Einstellwinkelbewegungen der Blattsteuerhülle 3 geschwenkt wird.

Wie die Zeichnung weiter verdeutlicht, besteht das Federelement "Strebe 1" vorzugsweise aus zwei torsions- und biegeelastischen Platten 1', welche jeweils die Form des T-Profils aufweisen und im Verbund in Blattiefenrichtung bzw. Bauteilquerrichtung ein V-Profil mit einem solchen Abstand seiner Profilschenkel an der dem feststehenden Bauteil "Blattwurzel 2" zugeordneten Profilwurzel 1.5 bilden, daß sich die Achsen der Profilschenkel in der Drehachse 5 des drehwinkelbeweglichen Bauteils "Blattsteuerhülle 3" schneiden. Diese Konfiguration hat den bereits erwähnten Vorteil, daß über den Winkel zwischen den beiden Platten 1' die Steifigkeit des Federelementes "Strebe 1" je nach Anwendungsfall einstellbar ist.

Durch den gewählten Plattenverbund ist schließlich auch noch ein einfacher und für eine Ausführung aus faserverstärktem Kunststoff besonders vorteilhafter Aufbau des Federelementes "Strebe 1" sichergestellt, welches beispielsweise durch bloßes Kleben mit den zu verbindenden Bauteilen vereinigt werden kann. Hierzu bedarf es lediglich einer Vereinigung der Blattfeder-Platten 1' über die Anschlußmittel 1.3, 1.4, welche dabei aus an den drei Enden des T-Profils der einzelnen Platte 1' abgewinkelten Anschlußlaschen und aus diese jeweils paarenden Verbindungslaschen zusammengesetzt sein können. Das Federelement ist demnach eine vor der Montage fertige Baueinheit, welche in der bevorzugten Ausführung aus faserverstärktem Kunststoff wartungsfrei ist und nahezu für eine unbegrenzte Lebensdauer ausgelegt werden kann.

Federelement zur drehwinkelbewegichen Verbindung zweiter Bauteile

## Patentansprüche

1. Federelement zur Verbindung zweier Bauteile im wesentlichen gleicher Erstreckungsrichtung, wobei ein Bauteil gegenüber dem anderen, feststehenden Bauteil drehwinkelbeweglich ist, **gekennzeichnet durch** ein T-förmiges Profil, dessen Profilsteg (1.2) senkrecht zur Bauteilerstreckungsrichtung verläuft und am Stegende ein Anschlußmittel (1.3) für das drehwinkelbewegliche Bauteil (Blattsteuerhülle 3) aufweist und dessen Profilfuß (1.1) in Bauteilerstreckungsrichtung verläuft, torsionselastisch ist und auf die beiden Fußenden beschränkte Anschlußmittel (1.4) für das feststehende Bauteil (Blattwurzel 2) aufweist.

2. Federelement nach Anspruch 1, **dadurch gekennzeichnet,** daß die Breite (b) des Profilfußes (1.1) größer ist als die Höhe (h) des Profilsteges (1.2).

3. Federelement nach Anspruch 1, **gekennzeichnet durch** einen Verbund aus mindestens zwei torsions- und biegeelastischen Platten (1'), welche jeweils die Form des T-Profils aufweisen und zusammen in Bauteilquerrichtung ein V-Profil mit einem solchen Abstand seiner Profilschenkel an der dem feststehenden Bauteil (Blattwurzel 2) zugeordneten Profilwurzel (1.5) bilden, daß sich die Achsen der Profilschenkel in der Drehachse (5) des drehwinkelbeweglichen Bauteils (Blattsteuerhülle 3) schneiden.

4. Federelement nach Anspruch 3, **dadurch gekennzeichnet,** daß die Platten (1') aus faserverstärktem Kunststoff gebildete Blattfedern sind.

5. Federelement nach den Ansprüchen 1 und 3 oder 4, **dadurch gekennzeichnet,** daß die Platten (1') über die Anschlußmittel (1.3, 1.4) vereinigt sind und diese aus an den drei Enden des T-Profils der einzelnen Platte abgewinkelten Anschlußlaschen und aus diese jeweils paarenden Verbindungslaschen zusammengesetzt sind.

## Claims

1. Spring element for the connection of two components which extend substantially in the same direction and whereby one component is rotary-angularly movable relative to the other fixed component, **characterised by** a T-shaped profile, the profile web (1.2) of which extends perpendicularly to the direction of extent of the component and comprises at the end of the web a connecting means (1.3) for the rotary-angularly movable component (blade-control sleeve 3) and the profile foot (1.1) of which extends in the direction of extent of the component, is torsionally elastic and comprises connecting means (1.4), which are restricted to the two foot ends, for the fixed component (blade root 2).

2. Spring element according to claim 1, **characterised in that** the width (b) of the profile foot (1.1) is greater than the height (h) of the profile web (1.2).

3. Spring element according to claim 1, **characterised by** a connection of at least two torsional and flexible plates (1'), which have the shape of a T-profile and together form across the component a V-profile at such distance of its profile shanks to the profile root (1.5) which is associated with the fixed component (blade root 2), that the axes of the profile shanks intersect in the rotary axis (5) of a rotary-angularly movable component (blade-control sleeve 3).

4. Spring element according to claim 3, **characterised in that** the plates (1') are leaf springs made of fibre-reinforced plastic material.

5. Spring element according to claims 1 and 3 or 4, **characterised in that** the plates (1') are interconnected via the connecting means (1.3, 1.4), and that they are composed of connecting butts which are angled at the three ends of the T-profile of each plate, and connecting butts which pair them respectively.

## Revendications

1. Elément élastique destiné à relier deux éléments de construction qui s'étendent sensiblement dans la même direction, l'un des éléments étant mobile en rotation par rapport à l'autre élément fixe, caractérisé par un profilé en T dont l'aile (1.2) est perpendiculaire à la direction dans laquelle s'étendent les éléments et porte à son extrémité un moyen de fixation (1.3) de l'élément mobile en rotation (fourreau de commande de pale 3 ) et dont le pied de profilé (1.1) s'étend dans la direction des éléments, est élastique en torsion et comporte des moyens de fixation (1.4) de l'élément fixe (pied de pale 2) qui sont limités aux deux extrémités du pied de profilé.

2. Elément élastique selon la revendication 1, caractérisé par le fait que la largeur (b) du pied du profilé (1.1) est supérieure à la hauteur (h) de l'aile du profilé (1.2).

3. Elément élastique selon la revendication 1, caractérisé par un ensemble formé d'au moins deux plaques (1') élastiques en torsion et en flexion qui ont respectivement la forme du profilé en T et forment ensemble un profilé V disposé dans la direction transversale de l'élément avec une distance des ailes de profilé par rapport au pied de profilé (1.5) associé à l'élément fixe telle que les axes des ailes de profilé se coupent sur l'axe de rotation (5) de l'élément mobile en rotation (fourreau de commande de pale (3).

4. Elément élastique selon la revendication 3, caractérisé par le fait que les plaques (1') sont des ressorts à lames réalisés en matière plastique renforcée par fibres.

5. Elément élastique selon les revendications 1 et 3 ou 4, caractérisé par le fait les plaques (1') sont réunies par l'intermédiaire desmoyens de fixation (1.3, 1.4) et que ceux-ci sont formés par des pattes de fixation pliées aux trois extrémités du profilé en T de chacune des plaques et de pattes de liaison qui assemblent les plaques par paires.